## Europäisches Patentamt
## European Patent Office
## Office européen des brevets

(11) Publication number: **0 275 256**
**B1**

(12) **EUROPEAN PATENT SPECIFICATION**

(45) Date of publication of patent specification: **05.09.90**

(51) Int. Cl.⁵: **D 21 C 5/02** // D21H17/63

(21) Application number: **86906481.6**

(22) Date of filing: **07.10.86**

(86) International application number:
**PCT/SE86/00455**

(87) International publication number:
**WO 87/03023 21.05.87 Gazette 87/11**

(54) METHOD OF PROCESSING WASTE PAPER.

(30) Priority: **06.11.85 SE 8505228**

(43) Date of publication of application:
**27.07.88 Bulletin 88/30**

(45) Publication of the grant of the patent:
**05.09.90 Bulletin 90/36**

(84) Designated Contracting States:
**AT DE FR GB SE**

(56) References cited:
**EP-A-0 172 118**
**DE-B-2 311 674**
**GB-C- 984 182**

(73) Proprietor: **SUNDS DEFIBRATOR INDUSTRIES AKTIEBOLAG**
**S-851 94 Sundsvall (SE)**

(72) Inventor: **DE RUVO, Alf, Romano**
**Tullgatan 19**
**S-852 33 Sundsvall (SE)**

(74) Representative: **Sundqvist, Hans**
**Sunds Defibrator Industries Aktiebolag Patents Dept. Ralambsvägen 7**
**S-112 59 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention relates to the delignification of waste paper with a high lignin content, preferably corrugated cardboard containing chemical high-yield pulp. It has been proved possible by this processing to restore to a certain extent the original properties of the fibres in respect of flexibility and swelling degree, without increasing the dewatering resistance.

As to processing of waste paper we would refer to DE—B—2 311 674 and EP—A—0 172 118.

Waste paper of the aforesaid kind often contains aluminium in an amount of approximately 5—10 kg/ton bone-dry pulp. This aluminium usually has been added in the form of alum as retention agent at previous papermaking.

It is known that aluminium causes problems with incrustation in evaporation plants. Magnesium compounds can be added for reducing these problems. Aluminium can hereby be precipitated in the form of aluminium-magnesium compounds. In this way the amount of solved aluminium in the pulp suspension can be decreased.

Due to the relatively high aluminium content in waste paper, however, this measure is not sufficient for rendering is possible to recycle white water from the delignification step to the evaporation plant. Too great an amount of solved aluminium would in this case be returned to the evaporation and give rise to incrustation problems.

The recycling of the white water from the delignification step, however, is desirable and necessary in view of the chemical and COD-content on the white water.

The present invention offers a solution to the aforesaid problems. After pretreatment by pulping and screening, an oxygen delignification is carried out, whereafter the pulp is transferred to a paper mill for papermaking. Prior to the delignification step the pulp is dewatered, said dewatering resulting in white water containing solved aluminium. According to the invention at least the main part of the white water is transferred directly as dilution liquid in the paper mill, preferably for diluting the stock. Substantially all solved aluminium is thereby removed from the pulp and transferred to the paper mill without being mixed into the circulation system of the delignification step. This implies that the white water from the dewatering after the delignification can be recycled to evaporation and chemical recovery with a minimum aluminium content.

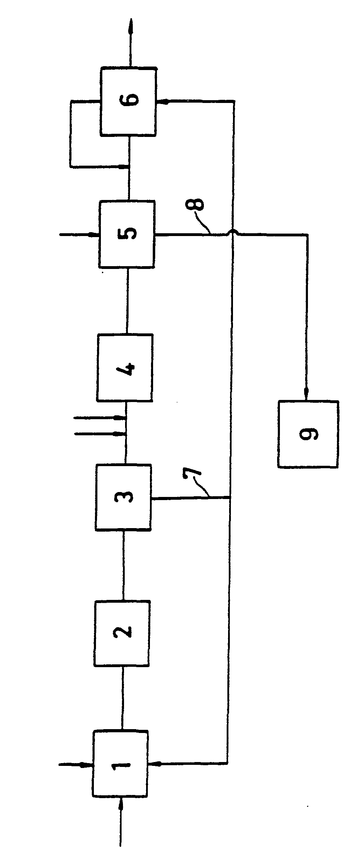

The invention is described in greater detail in the following, with reference to an embodiment thereof, the flow diagram of which is shown in the accompanying Figure.

Waste paper is charged into a pulper 1 and finely distributed therein to pulp. At the dilution a certain amount of NaOH can be added. The waste paper preferably consists of corrugated cardboard made of chemical pulp with a high lignin content, but also mechanical pulp can be used to a certain extent. After the pulping, the pulp is cleaned in screens 2 whereby the concentration of the pulp is relatively low, for example about 1%.

Thereafter the pulp is dewatered in a dewatering press 3 and thereafter steam-treated. Alkali and oxygen are added and intensively admixed. The subsequent oxygen delignification is carried out in a pressurized reactor 4 at a pulp concentration of 10—12% or lower. Subsequent to the delignification washing is carried out in a washing press 5, from which the pulp is transferred for papermaking in a paper mill 6. In connection therewith the return fibre pulp is mixed with other pulps, for example unbleached kraft pulp for the making of, for example, kraft liner. It is, of course, also possible to make other paper qualities. Additional bleaching and treatment of the return fibre pulp can then be carried out. By the aforesaid method, the properties of the return fibre pulp are so improved that a greater amount of return fibres can be used without deteriorating the properties of the final product.

The white water is transported as follows. From the dewatering press 3 the main part of the white water 7 is directed directly to the paper mill 6. A certain amount, however, can be recycled for dilution in the pulper 1. From the washing press 5 the white water 8 is directed to evaporation and chemical recovery 9. White water from the paper mill 6 can be utilized for diluting the pulp after the washing press 5.

The method, thus, implies that the main part of the solved aluminium is transferred via the white water flow 7 to the paper mill 6 past the oxygen delignification. This aluminium together with added alum will serve as retention agent in the papermaking machine. The white water 8 from the delignification thereby can be recycled to the recovery cycle. The aluminium content in this white water 8 can be kept so low, that no problems with incrustation in the evaporation plant will arise.

## Claims

1. A method of processing waste paper with a high lignin content, comprising pre-treatment by pulping and screening, oxygen delignification and transfer to a paper mill for papermaking whereby the pulp is dewatered prior to the delignification step, said dewatering resulting in white water containing solved aluminium, characterized in that at least the main part of said white water containing solved aluminium is transferred directly as dilution liquid to the paper mill, and that white water substantially free of aluminium coming from dewatering after the delignification step is led off to evaporation and chemical recovery.

2. A method as defined in claim 1, characterized in that the aluminium content in the white water transferred to the paper mill is utilized as retention agent in the stock.

3. A method as defined in claim 1 or 2, characterized in that the remainder of the white water from the dewatering prior to the delignification step is recycled for dilution at the pulping.

**Patentansprüche**

1. Verfahren zum Behandeln von Altpapier mit hohem, Ligningehalt, umfassend die Vorebehandlung der Pülpebildung, des Siebens, der Sauerstoffentlignifizierung und der Überführung zu einer Papiermühle zur Papierherstellung, wobei die Pülpe vor dem Entlignifizierungsschritt entwässert wird und beim Entwässern aluminiumhältige Weißlauge erhalten wird, dadurch gekennzeichnet, daß zumindest der Grosteil der Weißlauge, die gelöstes Aluminium enthält, direkt als Verdünnungsflüssigkeit zur Papiermühle gebracht wird, und daß im wesentlichen aluminiumfreie Weißlauge, die vom Englignifizierungsschritt kommt, zum Verdampfen und zur chemischen Rückewinnung gebracht wird.

2. Verfahren nach Anspruch 1, dadurch gekennzeichnet, daß der Aluminiumgehalt der Weißlauge, die zur Papiermühle gebracht wird, als Rückhaltemittel im Verfahren gebraucht wird.

3. Verfahren nach Anspruch 1 oder 2, dadurch gekennzeichnet, daß die Reste der Weißlauge vom Entwässern vor dem Englignifizierungsschritt zum verdünnen beim Pülpebilden zurückgeführt wird.

**Revendications**

1. Procédé de traitement de déchets de papier à teneur en lignine élevée comportant un prétraitement comprenant la préparation de la pâte, un classage, une délignification à l'oxygène, et le transport jusqu'à une machine à papier pour la fabrication du papier, selon lequel la pâte est déshydratée avant l'étape de la délignification, ladite déshydratation donnant lieu à de l'eau blanche contenant de l'aluminium dissous, caractérisé en ce qu'au moins la partie principale de ladite eau blanche contenant de l'aluminium dissous est envoyée directement comme liquide de dilution à la machine à papier et en ce que l'eau blanche pratiquement débarassée d'aluminium qui provient de l'étape de déshydratation après l'étape de délignification est envoyée à l'installation d'évaporation et de récupération chimique.

2. Procédé selon la revendication 1, caractérisé en ce que l'aluminium contenu dans l'eau blanche envoyée à la machine à papier est utilisé comme agent de rétention dans la pâte travaillée.

3. Procédé selon l'une des revendications 1 ou 2, caractérisé en ce que le reste de l'eau blanche qui provient de la déshydration avant l'étape de délignification est recyclée pour la dilution dans l'étape de préparation de la pâte.